# EUROPÄISCHE PATENTANMELDUNG

(11) **EP 2 765 277 A2**
(43) Veröffentlichungstag der Anmeldung: **13.08.2014**
(21) Anmeldenummer: 13194291.4
(22) Anmeldetag: 25.11.2013
(51) Int. Cl.: F01K 3/02, F01K 3/10

(54) **Abwärmenutzung und Leistungserhöhung von Gasturbinenanlagen**

(30) Priorität: 08.02.2013 DE 102013202111
(71) Anmelder: Siemens Aktiengesellschaft, 80333 München (DE)
(72) Erfinder: Haje, Detlef, 02828 Görlitz (DE)

(57) **Zusammenfassung**

Die vorliegende Erfindung betrifft eine Kraft-Wärme-Kopplungsanordnung (100), welche eine Gasturbinenanlage (110) zum Erzeugen von mechanischer Leistung, eine Wärmekraftanlage (120) mit einem Wärmetauscher (121) und einer Turbine (122) und einen Verdichter (130) zum Verdichten eines Hilfsluftstroms aufweist. Der Gasturbinenanlage (110) ist ein Zuluftstrom (111) zuführbar und ein Abluftstrom (112) abführbar. Die Wärmekraftanlage (120) ist mit einem Arbeitsmedium (126) betreibbar, wobei der Wärmetauscher (121) mit der Gasturbinenanlage (110) derart gekoppelt ist, dass thermische Energie von dem Abluftstrom (112) auf das Arbeitsmedium (126) übertragbar ist, sodass die Turbine (122) mittels des Arbeitsmediums betreibbar ist. Der Verdichter (130) ist mittels der Turbine (122) antreibbar, wobei der Verdichter (130) mit der Gasturbinenanlage (110) derart gekoppelt ist, dass der verdichtete Hilfsluftstrom (131) in die Gasturbinenanlage (110) einspeisbar ist.

## Beschreibung

### Technisches Gebiet

Die vorliegende Erfindung betrifft eine Kraft-Wärme-Kopplungsanordnung sowie ein Verfahren zum Betreiben einer Kraft-Wärme-Kopplungsanordnung.

### Hintergrund der Erfindung

Zur Bereitstellung mechanischer Leistung werden Gasturbinenanlagen eingesetzt. Die im Abgas der Gasturbinenanlagen vorhandene Abwärme wird oftmals zur weiteren Leistungsbereitstellung genutzt. Dabei ist bekannt, mit Hilfe einer nachgeschalteten Dampfturbinenanlage mittels des Abgases zusätzliche mechanische Leistung zu erzeugen.

In einer Dampfturbinenanlage wird beispielsweise ein Abhitzedampferzeuger und eine Dampfturbinenanlage, eine sogenannte GuD-Anlage oder eine Combined Cycle-Anlage, eingesetzt. Ferner ist bekannt mit der vorhandenen Abwärme einen offenen Wärmekraftkreislauf oder einen geschlossenen Wärmekraftmaschinenkreislauf, wie beispielsweise einen Organic Rankine Cycle oder Sterling Motor, anzutreiben.

Es ist besonders schwierig, den Wellenstrang der Gasturbinenanlage zur Leistungsgradverbesserung oder Wirkungsgradverbesserung mit einer nachgeschalteten Wärmekraftmaschine zu verbessern. Wellenstränge, z.B. bei bestehenden Kraftwerken oder Verdichterstationen, können nur unter signifikanten Modifikationen, wie beispielsweise einer Anbringung weiterer Kupplungen im Wellenstrang oder Fundament- und Gebäudemodifikationen, für die Aufnahme zusätzlicher mechanischer Leistung eingerichtet werden.

Einfacher ist beispielsweise ein separater Wellenstrang, bei dem die Wärmekraftmaschine einen Generator zur Stromerzeugung antreibt. Allerdings ist eine Netzeinspeisung der zusätzlich bereitgestellten elektrischen Leistung insbesondere bei solchen Gasturbinenanlagen schwierig, welche an abgelegenen Orten, wie zum Beispiel an Antriebsanlagen von Gaskompressor-Stationen für Erdgas-Pipelines oder in einer Netzinsel betrieben werden und keinen Zugang zu einem elektrischen Übertragungsnetz aufweisen.

### Darstellung der Erfindung

Es ist eine Aufgabe der vorliegenden Erfindung, eine Kraft-Wärme-Kopplungsanordnung bereitzustellen, welche effizient an entlegenen Orten betreibbar ist.

Diese Aufgabe wird durch eine Kraft-Wärme-Kopplungsanordnung und durch ein Verfahren zum Betreiben einer Kraft-Wärme-Kopplungsanordnung gemäß den unabhängigen Ansprüchen gelöst.

Gemäß eines ersten Aspekts der vorliegenden Erfindung wird eine Kraft-Wärme-Kopplungsanordnung beschrieben, welche eine Gasturbinenanlage, eine Wärmekraftanlage und einen Verdichter aufweist. Die Gasturbinenanlage dient zum Erzeugen von mechanischer Leistung, wobei der Gasturbinenanlage ein Zuluftstrom zuführbar ist und ein Abluftstrom abführbar ist. Die Wärmekraftanlage weist einen Wärmetauscher und eine Turbine auf, wobei die Wärmekraftanlage mit einem Arbeitsmedium betreibbar ist. Der Wärmetauscher ist mit der Gasturbinenanlage derart gekoppelt, dass thermische Energie von dem Abluftstrom auf das Arbeitsmedium übertragbar ist. Die Turbine ist mittels des Arbeitsmediums betreibbar.

Der Verdichter dient zum Verdichten eines Hilfsluftstroms, wobei der Verdichter mittels der Turbine der Wärmekraftanlage antreibbar ist. Der Verdichter ist mit der Gasturbinenanlage derart gekoppelt, dass der verdichtete Hilfsluftstrom in die Gasturbinenanlage einspeisbar ist.

Gemäß eines weiteren Aspekts der vorliegenden Erfindung wird ein Verfahren zum Betreiben einer Kraft-Wärme-Kopplungsanordnung beschrieben. Zunächst wird mechanische Leistung mittels einer Gasturbinenanlage erzeugt, wobei der Gasturbinenanlage ein Zuluftstrom zuführbar ist und ein Abluftstrom abführbar ist. Eine Wärmekraftanlage wird mittels eines Arbeitsmediums betrieben, wobei die Wärmekraftanlage einen Wärmetauscher und eine Turbine aufweist. Der Wärmetauscher ist mit der Gasturbinenanlage derart gekoppelt, dass thermische Energie von dem Abluftstrom auf das Arbeitsmedium übertragbar ist, so dass die Turbine mittels des Arbeitsmediums betreibbar ist. Ein Hilfsluftstrom wird mittels eines Verdichters verdichtet, wobei der Verdichter mittels der Turbine antreibbar ist. Der verdichtete Hilfsluftstrom wird in die Gasturbinenanlage mittels Koppelns eines Verdichters mit der Gasturbinenanlage eingespeist.

Die Gasturbinenanlage dient zum Erzeugen von mechanischer Leistung, beispielsweise um Gaskompressor-Stationen von Erdgas-Pipelines, anzutreiben. Die Gasturbinenanlage weist eine Verdichterstufe, eine Brennkammer und eine Turbinenstufe auf. Ein Zuluftstrom aus der Umgebungsluft wird zunächst der Verdichterstufe zugeführt, so dass der Zuluftstrom verdichtet wird. Anschließend wird die verdichtete Luft einer Brennkammer zugeführt, in welcher thermische Energie mittels Verbrennens eines Brennstoffs erzeugt wird. In einer anschließenden Turbinenstufe wird die Luft entspannt und als Abluftstrom abgeführt. In der Turbinenstufe wird die energetisch angereicherte Luft eingesetzt, um Turbinenschaufeln anzutreiben, so dass Rotationsenergie und letztlich die mechanische Arbeitsenergie erzeugt wird. Die Rotorblätter in der Turbinenstufe sind auf einer Abtriebswelle befestigt. Die energetisch angereicherte Luft treibt somit die Abtriebswelle an, bevor diese als Abluftstrom abgeführt wird. Die Abtriebswelle treibt einerseits die Verdichterstufe an und andererseits andere, an die Gasturbinenanlage gekoppelte Vorrichtungen, wie beispielsweise einen Verdichter oder einen Generator.

Der Abluftstrom weist die Abluft aus der Gasturbinenanlage auf, wobei die Abluft hohe Temperaturen aufweist, die ungenutzt aus der Gasturbinenanlage entweicht.

Die Wärmekraftanlage nutzt die Wärmeenergie insbesondere aus dem Abluftstrom aus, um daraus weitere mechanische Energie zu erzeugen. Dabei wird insbesondere das Bestreben der Wärmeenergie ausgenutzt von Gebieten mit einer höheren Wärmetemperatur zu solchen mit einer niederen Temperatur zu fließen. Die Wärmekraftanlage weist insbesondere den Wärmetauscher und die Turbine auf. Das Arbeitsmedium der Wärmekraftanlage durchläuft einen Heizkreislauf des Wärmetauschers, wobei der Abluftstrom der Turbine durch einen weiteren Heizkreislauf strömt. Somit kann thermische Energie von dem Abluftstrom auf das Arbeitsmedium übertragen werden, so dass das Arbeitsmedium mittels des Wärmetauschers erhitzt und energetisch angereichert wird.

Der Wärmetauscher ist beispielsweise ein Plattenwärmeübertrager, ein Spiralwärmeübertrager, ein Rohrwärmeübertrager bzw. ein Rohrbündelwärmeübertrager, ein U-Rohr-Wärmeübertrager, ein Mantel-Rohr-Wärmeübertrager oder ein Gegenstrom-Schicht-Wärmeübertrager. Der Wärmetauscher wandelt das flüssige Arbeitsmedium z.B. in einen dampfförmigen Zustand um.

Das erhitzte Arbeitsmedium wird der Turbine der Wärmekraftanlage zugeführt. Aufgrund des energetisch hoch angereicherten Arbeitsmediums wird die Turbine (Entspannungsturbine) betrieben, so dass aufgrund der Entspannung des Arbeitsmediums mechanische Energie mittels der Turbine erzeugt wird.

Anschließend kann das Arbeitsmedium einen Kondensator und eine Speisepumpe der Wärmekraftanlage durchlaufen.

In dem Kondensator wird das Arbeitsmedium von einem beispielsweise dampfförmigen Zustand nahezu isobar bei einem vorgegebenen Kondensatordruck kondensiert. Anschließend wird in der Speisepumpe der Druck des Arbeitsmediums nahezu adiabat und nahezu isotrop erhöht und wiederum dem Wärmetauscher zugeführt.

Der Kondensator kann beispielsweise als flüssigkeitsgekühlter (z.B. wassergekühlter) Kondensator oder als luftgekühlter Kondensator, welcher beispielsweise einen Ventilator aufweist, ausgebildet sein. Als flüssigkeitsgekühlter Kondensator kann insbesondere ein flüssigkeitsgekühlter Oberflächenkondensator, beispielsweise in der Form eines Rohrbündelwärmeübertragers oder eines Plattenwärmeübertragers eingesetzt werden. Nach Durchlaufen einer Speisepumpe wird das Arbeitsmedium wiederum dem Wärmetauscher zugeführt.

Die Turbine der Wärmekraftanlage treibt den Verdichter an. Der Verdichter kann beispielsweise als Strömungsmaschine (Radial- oder Axial-Verdichter) oder als Verdrängungsmaschine (Kolbenverdichter) ausgebildet sein.

Die Turbine ist eine Strömungsmaschine, welche die innere Energie des dampfförmigen Arbeitsmediums in Rotationsenergie und letztlich in mechanische Arbeitsenergie umwandelt. Die Turbine weist dazu insbesondere Rotorblätter auf, welche auf einer Abtriebswelle befestigt sind. Aufgrund der Umströmung des Arbeitsmediums an den Rotorblättern wird ein Teil der inneren Energie des Arbeitsmediums, welches beispielsweise aus Bewegungs-, Lage- und Druckenergie zusammengesetzt ist, entzogen, und auf die Rotorblätter übertragen. Dies führt dazu, dass sich die Abtriebswelle der Turbinen in Drehung versetzt, so dass nutzbare Leistung, bzw. mechanische Arbeit, erzeugt wird. Beispielsweise kann an die Abtriebswelle ein Generator oder eine andere Arbeitsmaschine angekoppelt werden.

Der Verdichter saugt Umgebungsluft als Hilfsluftstrom an und gibt einen entsprechend verdichteten Hilfsluftstrom ab.

Gemäß dem Ansatz der vorliegenden Erfindung wird dieser verdichtete Hilfsluftstrom der Gasturbine zugeführt, so dass die Leistungssteigerung bzw. die Abwärmenutzung derart umgesetzt wird, dass der Gasturbine ein zusätzlicher hoch energetischer Hilfsluftstrom zur Leistungssteigerung der Gasturbinenanlage zugeführt wird.

Mit anderen Worten wird die durch die Gasturbinenanlagen-Abwärme bereitgestellte Leistung nicht wie bei konventionellen Ansätzen in mechanischer Form in den Wellenstrang der Gasturbinenanlage zurückgeführt, sondern es wird durch eine Zuführung des verdichteten Hilfsluftstroms eine Leistungssteigerung der Gasturbinenanlage erzielt. Dazu wird die Abwärme des Abluftstroms mit Hilfe der Wärmekraftanlage in mechanische Leistung gewandelt und diese zur Verdichtung des Hilfsluftstroms aufgewendet. Der Hilfsluftstrom wird sodann in z.B. Verdichterstufen der Gasturbinenanlage eingeleitet. Somit kann der Leistungsbedarf beispielsweise der Verdichterstufe reduziert werden. Unter Berücksichtigung der Auslegungsgrenzen der Gasturbinenanlage kann weiterhin eine Steigerung des Luftmassenstroms und damit der Leistung der Gasturbinenanlage erzielt werden.

Auf diese Weise wird der Leistungsbedarf der Verdichterstufe reduziert, da die gleiche Luftmenge beispielsweise mit geringerer spezifischer Leistung des Verdichters für den Gasturbinenprozess bereitgestellt werden kann. Somit kann die Leistung und/oder der Wirkungsgrad der Gasturbinenanlage erhöht werden.

In einer beispielhaften Ausführungsform ist der Verdichter der Gasturbinenanlage vorgeschaltet, sodass der verdichtete Hilfsluftstrom als Teil des Zuluftstroms der Gasturbinenanlage zuführbar ist. Falls der Verdichter der Gasturbinenanlage vorgeschaltet ist, kann gemäß einer weiteren beispielhaften Ausführungsform der Hilfsluftstrom den Zuluftstrom der Gasturbinenanlage darstellen.

Ferner ist es nicht notwendig, mittels der Abwärme des Abluftstroms zusätzlich Strom zu erzeugen, welcher in ein an die Gasturbinenanlage angeschlossenes Stromnetz eingespeist werden muss. Die Leistungssteigerung erfolgt nämlich über eine zusätzliche Bereitstellung des einen erhöhten Druck aufweisenden Hilfsluftstroms.

Gemäß einer weiteren beispielhaften Ausführungsform weist die Kraft-Wärme-Kopplungsanordnung einen weiteren Wärmetauscher auf, welcher mit der Gasturbinenanlage und dem Verdichter derart gekoppelt ist, dass thermische Energie von dem Abluftstrom der Gasturbinenanlage auf den verdichteten Hilfsluftstrom übertragbar ist. Beispielsweise kann somit der verdichtete Hilfsluftstrom vor Einspeisung in die Gasturbinenanlage vorerhitzt werden, so dass der Abluftstrom eine zusätzliche thermische Energie aufweist, welche zur Effizienzsteigerung der Gasturbinenanlage eingesetzt werden kann.

Gemäß einer weiteren beispielhaften Ausführungsform weist die Gasturbinenanlage eine Verdichterstufe auf, wobei der Verdichter mit der Gasturbinenanlage derart gekoppelt ist, dass der verdichtete Hilfsluftstrom in die Verdichterstufe einspeisbar ist. Wie eingangs bereits beschrieben, wird somit der Leistungsbedarf des Verdichters reduziert, wodurch der Gesamtwirkungsgrad der Turbine erhöht wird.

Gemäß einer weiteren beispielhaften Ausführungsform weist die Gasturbinenanlage ein Kühlluftsystem auf, wobei der Verdichter mit der Gasturbinenanlage derart gekoppelt ist, dass der verdichtete Hilfsluftstrom in das Kühlluftsystem einspeisbar ist. Über eine Abzapfung z.B. in der Verdichterstufe wird üblicherweise ein Luftmassenstrom aus der Gasturbinenanlage entnommen und einem Kühlluftsystem der Gasturbinenanlage zugeführt. Durch die Entnahme eines Massenstroms aus der Verdichterstufe wird die Effizienz der Gasturbinenanlage reduziert. Mittels des vorliegenden beispielhaften Ausführungsbeispiels kann die Abzapfmenge der Luft aus der Verdichterstufe für das Kühlluftsystem reduziert werden, indem dem Kühlluftsystem direkt der einen erhöhten Druck aufweisende Hilfsluftstrom zugeführt wird.

Gemäß einer weiteren beispielhaften Ausführungsform weist die Gasturbinenanlage ein Brennluftzuführsystem auf, wobei der Verdichter mit der Gasturbinenanlage derart gekoppelt ist, dass der verdichtete Hilfsluftstrom in das Brennluftzuführsystem einspeisbar ist. Beispielsweise kann eine Brennkammer der Gasturbinenanlage mit einem Kraftstoffluftgemisch betrieben werden, welches nach der Verdichterstufe der Brennkammer zugeführt wird. Die Luft des Kraftstoff-Luftgemisches kann beispielsweise durch den verdichteten Hilfsluftstrom bereitgestellt werden.

Gemäß einer weiteren beispielhaften Ausführungsform weist die Gasturbinenanlage eine Turbinenstufe auf, wobei der Verdichter mit der Gasturbinenanlage derart gekoppelt ist, dass der verdichtete Hilfsluftstrom in die Turbinenstufe einspeisbar ist. Somit kann beispielsweise auch nach bereits fortgeschrittener Entspannung der Luft in der Turbinenstufe ein ausreichender Arbeitsdruck mittels des verdichteten Hilfsluftstroms bereitgestellt werden, um weiter effizient mechanische Leistung in der Turbinenstufe zu erzeugen.

Gemäß einer weiteren beispielhaften Ausführungsform weist die Kraft-Wärme-Kopplungsanordnung einen Zwischenwärmetauscher auf, insbesondere einen Thermoöl-Wärmetauscher, mit einem Wärmemittel. Der Zwischenwärmetauscher ist mit der Gasturbinenanlage derart gekoppelt, dass thermische Energie von dem Abluftstrom auf das Wärmemittel übertragbar ist, so dass das Wärmemittel eine erste Temperatur aufweist. Der Zwischenwärmetauscher ist ferner mit dem Wärmetauscher derart gekoppelt, dass thermische Energie von dem Wärmemittel auf das Arbeitsmedium übertragbar ist, so dass das Arbeitsmedium eine zweite Temperatur aufweist. Die erste Temperatur ist dabei höher als die zweite Temperatur. Somit kann der Wärmeübertrager von dem Abluftstrom der Gasturbinenanlage auf das Arbeitsmedium der Wärmekraftmaschine nicht nur unmittelbar über einen Wärmetauscher, sondern mittelbar über den Zwischenwärmetauscher, bzw. den Thermoöl-Wärmetauscher, erfolgen. Somit kann die Temperatur des Arbeitsmediums gezielt und unabhängiger von der Temperatur des Abluftstroms eingestellt werden, um die Wärmekraftanlage effizient zu betreiben.

Gemäß einer weiteren beispielhaften Ausführungsform ist der Verdichter eine Strömungsmaschine oder eine Verdrängungsmaschine. Die Verdichtung des Hilfsluftstroms kann vorzugsweise gemäß einer Strömungsmaschine als Verdichter erfolgen, um einen hohen Massenstrom der Hilfsluft aufzubringen. Insbesondere kann der Verdichter als Strömungsmaschine drehzahlvariabel betrieben werden. Somit stellt sich ein günstiges Teillastverhalten ein, welches dem Teillastverhalten der Gasturbinenanlage angepasst werden kann. Die Turbine und der Verdichter können direkt gekoppelt werden oder durch ein Getriebe miteinander gekoppelt werden. Außer der Regelung der Strömungsmaschine über die Drehzahl können auch andere Strömungsmaschinen-typische Regelungsmethoden verwendet werden, z.B. Leitgitterverstellung, Ansaugdrosselung, etc.

Alternativ können auch Verdrängungsmaschinen als Verdichter eingesetzt werden, insbesondere, wenn hohe Drücke in dem Hilfsluftstrom erzielt werden sollen. Neben der Regelung über die Drehzahl können hier Regelungen für Verdrängungsmaschinen verwendet werden, wie beispielsweise die Verstellung des Hubvolumens, der Zylinderabschaltung, etc.

Gemäß einer weiteren beispielhaften Ausführungsform ist das Arbeitsmedium ein organisches Medium, insbesondere Silikonöl, Toluol, Iso-Pentan, Iso-Oktan, R134a, R236, R1234ze und/oder R1234yf, und/oder CO2.

Besteht das Arbeitsmedium aus einem organischen Medium, so kann mittels der Kraft-Wärme-Kopplungsanordnung der sogenannte Organic-Rankine-Cycle (ORC)-Prozess durchgeführt werden. Das organische Arbeitsmedium weist eine niedrigere Verdampfungstemperatur als Wasser auf. Dadurch ist der ORC-Prozess insbesondere bei einen geringen Temperaturgefälle des Arbeitsmediums zwischen dem Verdampfer und dem Kondensator vorteilhaft, da bereits bei einem geringen Temperaturgefälle zwischen dem Verdampfer und dem Kondensator ein effizienter Betrieb des ORC-Prozesses möglich ist. Mit der vorliegenden beispielhaften Ausführungsform der Erfindung kann somit effizient Abwärme in einem ORC-Prozess genützt werden. Die Kraft-Wärme-Kopplungsanordnung wird mit dem organischen Arbeitsmedium betrieben, welches die Eigenschaft besitzt, im Vergleich zu Wasser bereits bei moderatem geringem Druck und moderaten Umgebungstemperatur zu kondensieren. In dem Verdampfer reicht eine geringere thermische Energiezufuhr im Vergleich zu Wasser aus, um das organische Arbeitsmedium zu verdampfen.

Als Wärmekraftmaschine ist eine solche ORC-Wärmekraftmaschine geeignet, da auch unter klimatisch ungünstigen Bedingungen, wie z.B. in kühlen Umgebungen mit Dauerfrost, zuverlässig betrieben werden kann.

Gemäß einer weiteren beispielhaften Ausführungsform weist die Wärmekraftanlage eine Speisepumpe zum Druckerhöhen des Arbeitsmediums auf, wobei die Speisepumpe mittels der Gasturbinenanlage antreibbar ist. In der beispielhaften Ausführungsform, wird ein Teil der von der Gasturbinenanlage erzeugten mechanischen Leistung zum Betreiben der Speisepumpe und somit zum Druckerhöhen des Arbeitsmediums der Wärmekraftanlage verwendet. Somit sind keine externen Energiequellen zur Erzeugung von mechanischer Energie für die Speisepumpe notwendig. Die Kraft-Wärme-Kopplungsanordnung kann somit noch effizienter betrieben werden.

Insbesondere kann der verdichtete Hilfsluftstrom in Bereiche der Gasturbine, welche einen hohen Druck aufweisen, eingeleitet werden. Beispielsweise kann der Hilfsluftstrom, welcher einen hohen Druck aufweist, in einem bestimmten Druckbereich der Verdichterstufe eingeleitet werden. Der bestimmte Druckbereich wird bevorzugt derart ausgewählt, dass in dem bestimmten Druckbereich der verdichtete Hilfsluftstrom einen ähnlichen oder geringfügig größeren Druck als dem Druck des Arbeitsmediums in dem bestimmten Druckbereich der Verdichterstufe aufweist. Ferner kann wie oben beschrieben der einen erhöhten Druck aufweisende Hilfsluftstrom einer Kühlluftführung, einer Anzapfung, der Brennluftzuführung oder Turbinenstufe eingespeist werden. Somit kann die von der Wärmekraftmaschine aufgebrachte Verdichterleistung unmittelbar für den Gasturbinenprozess der Gasturbinenanlage verwendet werden.

Wie erwähnt kann dadurch der Leistungsbedarf der Verdichterstufe der Gasturbinenanlage nennenswert reduziert werden. Die eingesparte Leistung steht, beispielsweise bei Einwellen-Gasturbinenanlagen, an der Kupplung als Nutzleistung zur Verfügung. Alternativ kann, wenn keine höhere Leistung benötigt wird, eine Brennstoffeinsparung der Gasturbinenanlage erzielt werden.

Ferner kann die Gasturbinenanlage eine Zweiwellen-Gasturbinenanlage darstellen, bei welcher ebenfalls eine Leistungserhöhung in analoger Weise erreichbar ist. Bei einem geringeren Verdichterstufen-Leistungsbedarf und gleichzeitig konstantem Luftmassenstrom in der Gasturbinenanlage, wird die Drehzahl der Verdichterturbine ansteigen und es kann ein höherer Enddruck erreicht werden. Dies gestattet wiederum eine Leistungserhöhung an der Leistungsturbine (bei einem Zweiwellen-Gasturbinenanlagen wird eine Verdichterturbine (bestehend aus Verdichterstufen und Turbinenstufen) und eine Leistungsturbine (bestehend aus einer Entspannungsturbine) eingesetzt.

Ferner kann die einen erhöhten Druck aufweisende Hilfsluft auch in einer Turbinenstufe der Gasturbinenanlage eingeleitet werden und als zusätzlicher Volumenstrom entspannt werden. Ferner kann der verdichtete Hilfsluftstrom vor Einspeisen in die Gasturbinenanlage erwärmt werden, um eine höhere Leistungssteigerung zu erzielen. Besonders vorteilhaft kann eine Hilfsluftstromerwärmung dazu verwendet werden, um den Hilfsluftstrom mit einer bereits erhöhten Temperatur in oder vor dem Brennraum bzw. der Brennkammer der Gasturbinenanlage einzuleiten. Somit kann insbesondere ein Teil des Brennstoffs eingespart werden, welcher sonst zur Erwärmung der Luft erforderlich wäre.

Im Verlauf der Verdichtung des Hilfsluftstroms kann eine Zwischenkühlung vorgenommen werden, so dass die spezifische Verdichtungsarbeit abgesenkt wird. Dies geht vorteilhafterweise mit einer nachfolgenden Erwärmung (z.B. mittels des Abluftstroms der Gasturbinenanlage) einher.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Figuren näher beschrieben.

Fig. 1 zeigt eine schematische Darstellung einer Kraft-Wärme-Kopplungsanordnung gemäß einer beispielhaften Ausführungsform der vorliegenden Erfindung;

Fig. 2 zeigt eine beispielhafte Ausführungsform einer Kraft-Wärme-Kopplungsanordnung mit einem Zwischenwärmetauscher gemäß einer beispielhaften Ausführungsform der vorliegenden Erfindung; und

Fig. 3 zeigt eine Kraft-Wärme-Kopplungsanordnung mit einem weiteren Wärmetauscher zum Vorwärmen eines bedruckten Hilfsluftstroms gemäß einer beispielhaften Ausführungsform der vorliegenden Erfindung.

### Detaillierte Beschreibung von exemplarischen Ausführungsformen

Gleiche oder ähnliche Komponenten sind in den Figuren mit gleichen Bezugsziffern versehen. Die Darstellungen in den Figuren sind schematisch und nicht maßstäblich.

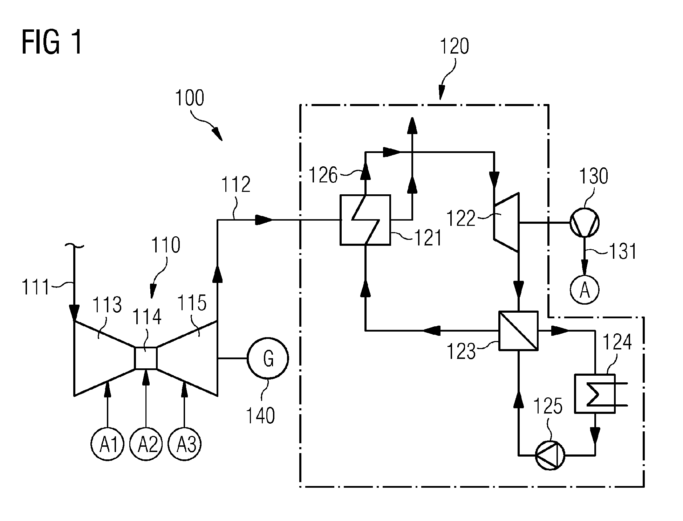

**Fig. 1** zeigt eine Kraft-Wärme-Kopplungsanordnung 100, welche eine Gasturbinenanlage 110, eine Wärmekraftanlage 120 und einen Verdichter 130 aufweist. Die Elemente, welche zur Wärmekraftanlage 120 zugehören, sind mittels der gestrichelten Linie eingerahmt.

Die Gasturbinenanlage 110 dient zum Erzeugen von mechanischer Leistung, wobei der Gasturbinenanlage 110 ein Zuluftstrom 111 (z.B. Umgebungsluft) zuführbar ist und ein Abluftstrom 112 abführbar ist.

Die Gasturbinenanlage 110 weist insbesondere eine Verdichterstufe 113, eine Brennkammer 114 und eine Turbinenstufe 115 auf. In der Verdichterstufe 113 wird die zugeführte Luft verdichtet und in der Brennkammer 114 mittels Verbrennung eines Brennstoffs thermische Energie zugeführt. In der Turbinenstufe 115 wird die erhitzte Luft, welche einen hohen Druck aufweist, entspannt, so dass mechanische Leistung erzeugt wird. Nach der Turbinenstufe 115 weist die entspannte Luft noch eine hohe Temperatur auf, welche als Abwärme in den Abluftstrom 112 abgeführt wird. Mittels der mechanischen Leistung, die von der Gasturbinenanlage 110 erzeugt wurde, kann beispielsweise ein Generator 140 oder ein Gaskompressor, beispielsweise einer Gaskompressor-Station einer Erdgas-Pipeline, betrieben werden.

Die Wärmekraftanlage 120 weist einen Wärmetauscher 121 und eine Turbine 122 auf. Die Wärmekraftanlage 120 ist mit einem Arbeitsmedium 126 betreibbar. Der Wärmetauscher 121 ist mit der Gasturbinenanlage 110 derart gekoppelt, dass thermische Energie von dem Abluftstrom 112 auf das Arbeitsmedium 126 übertragbar ist. Die Turbine 122 ist mittels des Arbeitsmediums betreibbar.

Der Verdichter 130 ist mittels der Turbine 122 antreibbar.

Der Verdichter 130 verdichtet einen Hilfsluftstrom, wobei die Hilfsluft beispielsweise aus der Umgebung zugeführt wird. Der Verdichter 130, welcher beispielsweise eine Strömungsmaschine oder eine Kolbenmaschine darstellt, ist mit der Gasturbinenanlage 110 derart gekoppelt, dass der verdichtete Hilfsluftstrom 131 in die Gasturbinenanlage 110 einspeisbar ist.

In Fig. 1 wird zur besseren Darstellung der verdichtete Hilfsluftstrom 131 nach dem Verdichter 130 mit einem A gekennzeichnet und an verschiedenen Einspeisestellen A1, A2, A3 in die Gasturbinenanlage 110 eingespeist.

Um die Wärmekraftanlage 120 effizienter zu gestalten, weist die Wärmekraftanlage 120 zusätzlich einen Kondensator 124 und eine Speisepumpe 125 auf. Das entspannte Arbeitsmedium 126 wird nach der Turbine 122 dem Kondensator 124 zugeführt und kondensiert. Anschließend wird ein Druck des kondensierten Arbeitsmediums 126 mittels der Speisepumpe 125 erhöht und das kondensierte Arbeitsmedium 126 erneut dem Wärmetauscher 121 zugeführt. Zur Wirkungsgradverbesserung der Wärmekraftanlage 120 weist diese beispielsweise einen Rekuperator 123 auf, wobei die thermische Energie des Arbeitsmediums 126 vor dem Kondensator 124 dem Arbeitsmedium 126 nach der Speisepumpe 125 zugeführt wird.

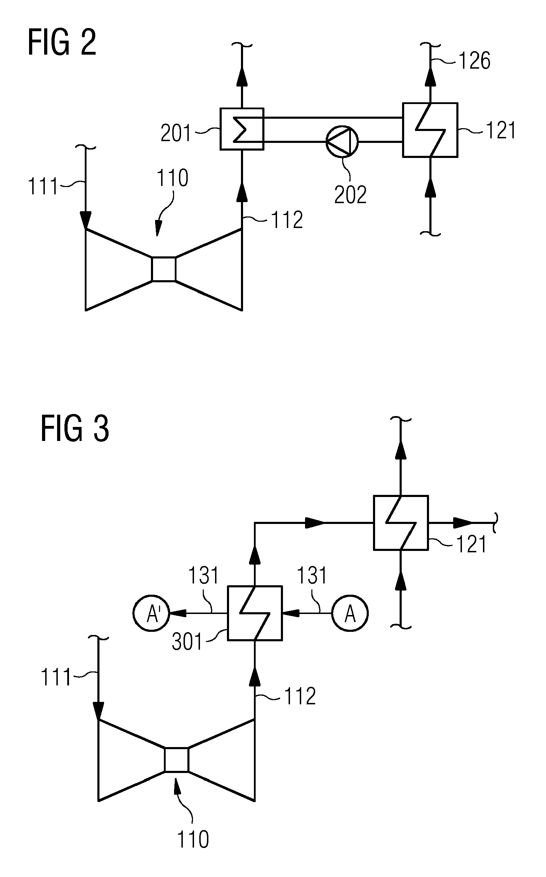

**Fig. 2** zeigt einen Zwischenwärmetauscher 201, welcher die thermische Energie des Abluftstroms 112 an ein Wärmemittel überträgt. Das Wärmemittel fließt von dem Zwischenwärmetauscher 201 zu dem Wärmetauscher 121, wobei die thermische Energie des Wärmemittels an das Arbeitsmittel 126 abgegeben wird.

Das Wärmemittel ist beispielsweise ein Thermoöl. Das Thermoöl kann beispielsweise zwischen dem Wärmetauscher 121 und dem Zwischenwärmetauscher 201 mittels einer weiteren Speisepumpe 202 befördert werden. Mittels des Zwischenwärmetauschers 201 und dem entsprechenden Wärmemittel kann besser eine gewünschte Temperatur des Arbeitsmediums 126 in der Wärmekraftanlage 120 eingestellt werden, so dass die Wärmekraftanlage 120 effektiver betrieben werden kann.

**Fig. 3** zeigt eine beispielhafte Ausführungsform der Kraft-Wärme-Kopplungsanordnung 100, bei welcher ein weiterer Wärmetauscher 301 zwischen dem Verdichter 130 und der Gasturbinenanlage 110 gekoppelt wird. Der verdichtete Hilfsluftstrom 131 strömt von dem Verdichter 130 (Einspeisestelle A) durch den weiteren Wärmetauscher 301 zu der Einspeisestelle A'. Der Abluftstrom 112 fließt ferner durch den weiteren Wärmetauscher 301, so dass thermische Energie von dem Abluftstrom an den verdichteten Hilfsluftstrom 131 abgegeben wird und der verdichtete Hilfsluftstrom 131 somit vorgewärmt wird. Der verdichtete Hilfsluftstrom 131 wird von der Position A' beispielsweise an einer beliebigen Einspeisestelle (siehe Fig. 1: A1, A2, A3) in die Gasturbinenanlage 110 eingespeist.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Kraft-Wärme-Kopplungsanordnung (100), aufweisend
eine Gasturbinenanlage (110) zum Erzeugen von mechanischer Leistung, wobei der Gasturbinenanlage (110) ein Zuluftstrom (111) zuführbar ist und ein Abluftstrom (112) abführbar ist,
eine Wärmekraftanlage (120) mit einem Wärmetauscher (121) und einer Turbine (122), wobei die Wärmekraftanlage (120) mit einem Arbeitsmedium (126) betreibbar ist,
wobei der Wärmetauscher (121) mit der Gasturbinenanlage (110) derart gekoppelt ist, dass thermische Energie von dem Abluftstrom (112) auf das Arbeitsmedium (126) übertragbar ist, sodass die Turbine (122) mittels des Arbeitsmediums betreibbar ist, und
einen Verdichter (130) zum Verdichten eines Hilfsluftstroms, wobei der Verdichter (130) mittels der Turbine (122) antreibbar ist,
wobei der Verdichter (130) mit der Gasturbinenanlage (110) derart gekoppelt ist, dass der verdichtete Hilfsluftstrom (131) in die Gasturbinenanlage (110) einspeisbar ist.

2. Kraft-Wärme-Kopplungsanordnung (100) gemäß Anspruch 1, ferner aufweisend,
einen weiteren Wärmetauscher (301), welcher mit der Gasturbinenanlage (110) und dem Verdichter (130) derart gekoppelt ist, dass thermische Energie von dem Abluftstrom (112) der Gasturbinenanlage (110) auf den verdichteten Hilfsluftstrom (131) übertragbar ist.

3. Kraft-Wärme-Kopplungsanordnung (100) gemäß Anspruch 1 oder 2,
wobei die Gasturbinenanlage (110) eine Verdichterstufe (113) aufweist, und
wobei der Verdichter (130) mit der Gasturbinenanlage (110) derart gekoppelt ist, dass der verdichtete Hilfsluftstrom (131) in die Verdichterstufe (113) einspeisbar ist.

4. Kraft-Wärme-Kopplungsanordnung (100) gemäß einem der Ansprüche 1 bis 3,
wobei die Gasturbinenanlage (110) ein Kühlluftsystem aufweist, und
wobei der Verdichter (130) mit der Gasturbinenanlage (110) derart gekoppelt ist, dass der verdichtete Hilfsluftstrom (131) in das Kühlluftsystem einspeisbar ist.

5. Kraft-Wärme-Kopplungsanordnung (100) gemäß einem der Ansprüche 1 bis 4,
wobei die Gasturbinenanlage (110) ein Brennluftzuführsystem aufweist, und
wobei der Verdichter (130) mit der Gasturbinenanlage (110) derart gekoppelt ist, dass der verdichtete Hilfsluftstrom (131) in das Brennluftzuführsystem einspeisbar ist.

6. Kraft-Wärme-Kopplungsanordnung (100) gemäß einem der Ansprüche 1 bis 5,
wobei die Gasturbinenanlage (110) eine Turbinenstufe (114) aufweist, und
wobei der Verdichter (130) mit der Gasturbinenanlage (110) derart gekoppelt ist, dass der verdichtete Hilfsluftstrom (131) in die Turbinenstufe (114) einspeisbar ist.

7. Kraft-Wärme-Kopplungsanordnung (100) gemäß einem der Ansprüche 1 bis 6, ferner aufweisend
einen Zwischenwärmetauscher (201), insbesondere einen Thermoöl-Wärmetauscher, mit einem Wärmemittel,
wobei der Zwischenwärmetauscher (201) mit der Gasturbinenanlage (110) derart gekoppelt ist, dass thermische Energie von dem Abluftstrom (112) auf das Wärmemittel übertragbar ist, so dass das Wärmemittel eine erste Temperatur aufweist,
wobei der Zwischenwärmetauscher (201) ferner mit dem Wärmetauscher (121) derart gekoppelt ist, dass thermische Energie von dem Wärmemittel auf das Arbeitsmedium (126) übertragbar ist, so dass das Arbeitsmedium (126) eine zweite Temperatur aufweist, und
wobei die erste Temperatur höher als die zweite Temperatur ist.

8. Kraft-Wärme-Kopplungsanordnung (100) gemäß einem der Ansprüche 1 bis 7,
wobei der Verdichter (130) eine Strömungsmaschine oder eine Verdrängungsmaschine ist.

9. Kraft-Wärme-Kopplungsanordnung (100) gemäß einem der Ansprüche 1 bis 8,
wobei das Arbeitsmedium (126) ein organisches Medium, insbesondere Silikonöl, Toluol, Iso-Pentan, Iso-Oktan, R134a, R236, R1234ZE und/oder R1234yf, oder CO2 aufweist.

10. Kraft-Wärme-Kopplungsanordnung (100) gemäß einem der Ansprüche 1 bis 9,
wobei die Wärmekraftanlage (120) eine Speisepumpe (125) zum Druckerhöhen des Arbeitsmediums (126) aufweist, und
wobei die Speisepumpe (125) mittels der Gasturbinenanlage (110) antreibbar ist.

11. Verfahren zum Betreiben einer Kraft-Wärme-Kopplungsanordnung (100), das Verfahren aufweisend
Erzeugen von mechanischer Leistung mittels einer Gasturbinenanlage (110),
wobei der Gasturbinenanlage (110) ein Zuluftstrom (111) zuführbar ist und ein Abluftstrom (112) abführbar ist,
Betreiben einer Wärmekraftanlage (120) mittels eines Arbeitsmediums (126),
wobei die Wärmekraftanlage (120) einen Wärmetauscher (121) und eine Turbine (122) aufweist,
wobei der Wärmetauscher (121) mit der Gasturbinenanlage (110) derart gekoppelt ist, dass thermische Energie von dem Abluftstrom (112) auf das Arbeitsmedium (126) übertragbar ist, sodass die Turbine (122) mittels des Arbeitsmediums (126) betreibbar ist,
Verdichten eines Hilfsluftstroms (131) mittels eines Verdichters (130),
wobei der Verdichter (130) mittels der Turbine (122) antreibbar ist, und
Einspeisen des verdichteten Hilfsluftstroms (131) in die Gasturbinenanlage (110) mittels Koppelns des Verdichters (130) mit der Gasturbinenanlage (110).
